# EUROPÄISCHE PATENTSCHRIFT

(11) **EP 1 186 373 B1**
(45) Veröffentlichungstag und Bekanntmachung des Hinweises auf die Patenterteilung: **31.05.2006**
(21) Anmeldenummer: 01119316.6
(22) Anmeldetag: 10.08.2001
(51) Int. Cl.: B23Q 3/06, B23Q 16/10

(54) **Spannvorrichtung, insbesondere für mehrseitig zu bearbeitende Werkstücke**
Clamping element, specially for workpieces to be machined on several sides
Moyen de serrage, notamment pour pièces à usiner sur plusieurs faces

(30) Priorität: 12.09.2000 DE 10044915
(43) Veröffentlichungstag der Anmeldung: 13.03.2002
(73) Patentinhaber: Albeck GmbH, 71336 Waiblingen-Neustadt (DE)
(72) Erfinder: Albeck, Tobias, 73547 Lorch-Waldhausen (DE); Albeck, Bernhard, 73547 Lorch-Waldhausen (DE)
(74) Vertreter: Rüger, Barthelt & Abel Patentanwälte

(56) Entgegenhaltungen:
- DE-C- 19 840 942
- US-A- 3 049 032
- US-A- 3 846 912
- US-A- 3 908 484

## Beschreibung

Die Erfindung betrifft eine Spannvorrichtung, insbesondere für mehrseitig zu bearbeitende Werkstücke, mit einem Werkstückträger, wenigstens einem zur Werkstückaufnahme eingerichteten Drehtisch, der an dem Werkstückträger um eine Drehachse drehbar gelagert ist und einer dem Drehtisch zugeordneten formschlüssigen Verriegelungseinrichtung an dem Werkstückträger, durch die der Drehtisch in einer vorgegebenen Drehwinkelstellung relativ zu dem Werkstückträger lagegenau verriegelbar ist.

Aus der DE 19840942 C1, die als nächstkommender Stand der Technik betrachtet wird, ist eine Mehrfach-Spannvorrichtung für mehrseitig zu bearbeitende Werkstücke bekannt, die einen länglichen, im Querschnitt polygonalen Werkstückträger aufweist, der wenigstens zwei parallel zu seiner Längsmittelachse verlaufende Aufspannflächen trägt und an wenigstens einer Seite in ortsfesten Lagermitteln um seine Längsachse um 360° drehbar gelagert ist. Auf jeder seiner Aufspannflächen sind wenigstens zwei Drehtische in einer Reihe nebeneinander angeordnet. Alle Drehtische sind durch Getriebemittel miteinander und mit einer gemeinsamen Antriebsquelle formschlüssig gekuppelt, derart , dass alle Drehtische in Abhängigkeit von einer Drehbewegung des Werkstückträgers um seine Längsmittelachse, um ihre jeweilige Drehachse über einen vorbestimmten, von der Verdrehung des Werkstückträgers abhängigen Winkelwert verdreht werden.

Jedem der Drehtische ist eine formschlüssige Verriegelungseinrichtung an dem Werkstückträger zugeordnet, durch die der Drehtisch und damit das auf ihm gespannte Werkstück in einer vorgegebenen Drehwinkelstellung relativ zu dem Werkstückträger lagerichtig verriegelbar ist. Dazu weist die Verriegelungseinrichtung zwei zueinander koaxiale, ringförmige Verriegelungsteile auf, die auf den einander zugewandten Planflächen als Verriegelungsmittel jeweils eine Hirth-Verzahnung tragen und von denen ein erstes Verriegelungsteil an dem Drehtisch angeschraubt und das zweite Verriegelungsteil drehfest mit dem Werkstückträger verbunden ist. Durch Betätigungsmittel mit einem druckmittelbetätigten Hubzylinder (Hydraulikzylinder) können die beiden Hirth-Verzahnungen außer Eingriff gebracht werden, um die über Getriebemittel mit einer gemeinsamen Antriebsquelle formschlüssig gekuppelten Drehtische in Abhängigkeit von einer Drehbewegung des Werkstückträgers um seine Längsmittelachse jeweils um den gleichen Drehwinkel zu verstellen. Nach der Einstellung einer neuen Drehwinkelstellung werden die Hirth-Verzahnungen der beiden Verriegelungsteile wieder miteinander in Eingriff gebracht, so dass die Drehtische für die nachfolgende Bearbeitung der auf Ihnen gespannten Werkstücke exakt lagerichtig, starr gegen den Werkstückträger verriegelt oder verrastet sind.

Der Vorteil dieser Ausbildung der Drehtische mit Hirth-Verzahnungen tragenden Verriegelungsteilen liegt darin, dass die Hirth-Verzahnungen eine optimale Teilgenauigkeit und Zentrierung gewährleisten. Dadurch ist während der Werkstückbearbeitung eine eng tolerierte exakte Positionierung jedes Drehtisches bezüglich des Werkstückträgers vorhanden, wobei die Verbindung zwischen dem Drehtisch und dem Werkstückträger eine hohe Kraftübertragung zulässt und gleichzeitig eine hohe Präzision bietet. An die die Drehtische bei außer Eingriff miteinander stehenden Verzahnungen, in eine jeweils neue Position bezüglich des Werkzeugträgers bringende, d.h. einen Teilvorgang durchführende Antriebseinrichtung und deren die Drehbewegung erzeugende Elemente werden dabei nur geringe Präzisionsanforderungen gestellt. Es genügt, dass die Antriebsvorrichtung den jeweiligen Drehtisch so nahe an die gewünschte Winkelposition heranführt, dass die beiden Verzahnungen bei der Verriegelung des Drehtisches lagerichtig ineinander finden.

Um den genau lagerichtigen, gegenseitigen Eingriff der Verzahnungen bei der Verriegelung der näherungsweise in eine neue Winkelposition überführten Drehtische zu gewährleisten ist eine Zahngröße oder Zahnteilung der Verzahnungen erforderlich, die es mit Sicherheit erlaubt, die bei der Drehbewegung der Drehtische vorhandenen Winkelpositionstoleranzen auszugleichen. Dadurch bedingt, ist die maximal mögliche Zähnezahl der Verzahnungen beschränkt, d.h. deren Zahnteilung darf einen von den Abmessungen der Verriegelungsteile abhängigen Mindestwert nicht unterschreiten. Dies hat zur Folge, dass sich Winkelteilungen kleiner als etwa 1 Winkelgrad praktisch kaum verwirklichen lassen. Es gibt aber Bearbeitungsfälle, bei denen die auf den Drehtischen gespannten Werkstücke zwischen Bearbeitungsvorgängen um Winkelwerte gedreht werden müssen, die kleiner als bspw. ein Winkelgrad sind.

Aus der US-A-3 846 912 ist ein Teil-Mechanismus bekannt, der mehrere koaxial zueinander angeordnete Teilscheiben aufweist, die Verzahnungen unterschiedlicher Zahnteilungen tragen, welche durch axiale Relativbewegungen der Teilscheiben wahlweise in und außer Eingriff gebracht werden können. Damit kann ein auf einer der Scheiben angeordnetes Werkstück nach dem Noniusprinzip um sehr kleine Winkelinkremente um die Scheibenachse gedreht und in der jeweils gewünschten Winkellage exakt lagerichtig formschlüssig verriegelt werden. Die Druckschrift offenbart keine konstruktiven Details eines Teilgerätes zu dem dieser Teil-mechanismus verwendet werden könnte.

Eine inkrementale Verdrehung und Fixierung einer um ihre Mittelachse drehbar in einem Gehäuse gelagerten Aufspannplatte erlaubt ein in der DE-A1 32 09 519 und der DE-A1 32 39 556 beschriebener Rundschalttisch. Dieser Rundschalttisch weist eine formschlüssige Verriegelungseinrichtung mit vier jeweils paarweise zusammenwirkenden Zahnkränzen auf, von denen zwei Zahnkränze, in einer gemeinsamen Planebene liegend, auf einem Ringkolben ausgebildet sind, der drehbar und axial verschieblich koaxial zu der Aufspannplatte in dem Gehäuse gelagert ist. Durch eine entsprechende axiale Verschiebung des Ringkolbens können dessen beide Zahnkränze gleichzeitig mit den ihnen zugeordneten Zahnkränzen in und außer Eingriff gebracht werden, um damit den Aufspannteller exakt lagerichtig in der jeweils gewünschten Winkelstellung gegen das Gehäuse zu verriegeln bzw. ihn für die Einstellung einer anderen Winkelstellung zu entriegeln. Der Schalttisch erlaubt es zwar mit Noniuswirkung Schaltschritte der Aufspannplatte um Bruchteile von Winkelgraden zu realisieren, doch benötigt er dazu zwei getrennte Antriebe für die Aufspannplatte und für den Ringkolben. Beiden Antrieben müssen eigene Steuereinrichtungen zugeordnet sein, um die jeweils gewünschte Winkelposition der Aufspannplatte ansteuern zu können. Schalttische dieser Bauart sind deshalb in der Konstruktion aufwendig und wegen ihres Aufbaus und der erforderlichen Antriebselemente nicht dazu geeignet, in größerer Zahl in einen gemeinsamen Werkstückträger eingebaut zu werden, wie dies bei Mehrfach-Spannvorrichtungen zur gleichzeitigen Bearbeitung mehrerer gleich gestalteter Werkstücke erforderlich ist.

Ausgehend von diesem Stand der Technik liegt der Erfindung die Aufgabe zugrunde, eine Spannvorrichtung der eingangs genannten Art zu schaffen, deren Drehtisch um kleine inkrementale Winkelschritte, insbesondere von kleiner als 1 Winkelgrad verdreht und sodann lagefest positioniert werden kann, ohne dass dazu zusätzliche Positionierantriebe und -steuerungen erforderlich wären, wobei sich die Spannvorrichtung durch einen einfachen, platzsparenden Aufbau auszeichnet und damit einen vielfältigen Einsatz ermöglicht.

Zur Lösung dieser Aufgabe weist die erfindungsgemäße Spannvorrichtung die Merkmale des Patentanspruchs 1 auf.

Die dem wenigstens einen Drehtisch der neuen Spannvorrichtung zugeordnete, formschlüssige Verrieglungseinrichtung an dem Werkstückträger weist wenigstens drei zueinander koaxiale Verrieglungsteile auf, von denen ein erstes Verriegelungsteil mit dem Drehtisch und ein zweites Verriegelungsteil mit dem Werkstückträger jeweils drehfest verbunden ist und wenigstens ein drittes Verriegelungsteil zwischen dem ersten und dem zweiten Verriegelungsteil angeordnet und bezüglich des Werkstückträgers axial verschieblich sowie drehbar gelagert ist und alle Verriegelungsteile auf einander zugewandten Flächen jeweils paarweise formschlüssig miteinander zusammenwirkende Verriegelungsmittel tragen, die durch axiale Relativbewegungen der Verriegelungsteile in und außer Eingriff bringbar sind.

Die Verriegelungsmittel weisen in der Regel jeweils eine Planverzahnung, insbesondere eine Hirth-Verzahnung auf, doch sind auch Ausführungsformen denkbar, bei denen formschlüssige Verriegelungsmittel in Gestalt von entsprechend angeordneten Prismen, Lochscheiben mit Indexbolzen, etc. verwendet werden.

Die Spannvorrichtung verfügt über Betätigungsmittel, um die Verriegelungsmittel der Verriegelungsteile derart in und außer Eingriff zu bringen, dass das dritte Verriegelungsteil immer mit wenigstens einem der beiden anderen Verriegelungsteile in Eingriff gehalten bleibt. Eine Antriebseinrichtung, die mit dem Drehtisch gekuppelt ist, dient dazu, den Drehtisch bei gelösten Verriegelungsmitteln um einen vorbestimmten Winkelwert um seine Drehachse zu verdrehen und den Drehtisch damit in eine jeweils neue gewünschte Winkelposition zu bringen, in der er anschließend exakt lagerichtig dadurch positioniert wird, dass die Verriegelungsmittel durch die Betätigungsmittel formschlüssig miteinander in Eingriff gebracht werden.

Das zwischen dem ersten und dem zweiten Verriegelungsteil angeordnete dritte Verriegelungsteil ist vorteilhafterweise als Ringscheibe ausgebildet, die auf den beiden einander gegenüberliegenden Planseiten jeweils Verriegelungsmittel, vorzugsweise in Form einer Planverzahnung, insbesondere einer Hirth-Verzahnung trägt. Dieses dritte Verriegelungsteil ist vorteilhafterweise mit radialem Spiel, d.h. begrenzt radial beweglich zwischen dem ersten und dem zweiten Verriegelungsteil drehbar gelagert. Durch diese lose Anordnung des dritten Verriegelungsteils wird sichergestellt, dass die einander zugeordneten, in der Regel als Zahnkränze ausgebildeten Verzahnungen, sich beim in Eingriff kommen unbehindert gegenseitig zentrieren und ineinander fügen können, so dass die hohe Präzision der Positionierung der Verriegelungsteile und damit des Drehtisches gewährleistet bleibt. Da das an sich lose gelagerte dritte Verriegelungsteil sowohl bei der Hubbewegung des Drehtisches zum Lösen dessen Verriegelung als auch bei dessen anschließender Drehbewegung zur Überführung in eine neue Winkelposition immer mit entweder dem ersten oder dem zweiten Verriegelungsteil in Eingriff gehalten bleibt, weist es immer eine vorherbestimmte, kontrollierte Position bezüglich des Drehtisches oder des Werkstückträgers auf, wie dies für die wiederholbare Einstellung eines vorgegebenen Drehwinkelwertes der Position des Drehtisches erforderlich ist. Die Planverzahnung des ersten Verriegelungsteils und die dieser zugeordnete Planverzahnung des dritten Verriegelungsteils weisen eine andere Zahnteilung auf wie die Planverzahnung des zweiten Verriegelungsteils und die dieser zugeordnete Planverzahnung des dritten Verriegelungsteils. Durch entsprechende Wahl der Zahnteilungen (oder der Teilungen der anders gestalteten Verriegelungsmittel) kann eine sehr feine inkrementale Drehwinkelpositionierung des Drehtisches durchgeführt werden, bei der die Drehwinkelinkremente lediglich Bruchteile eines Winkelgrades betragen, wie dies in der nachfolgenden Beschreibung eines Ausführungsbeispiels noch ausführlicher erläutert werden wird.

Die neue Spannvorrichtung kann grundsätzlich als Teilgerät oder Rundschalttisch mit lediglich einem Drehtisch Verwendung finden, doch ist sie aufgrund ihres einfachen platzsparenden Aufbaus sowie des Umstands, dass sie lediglich eine einzige Antriebseinrichtung für den Drehtisch und keine zusätzlichen Antriebs- und Steuereinrichtungen für Teilscheiben und dergleichen erfordert, insbesondere auch dazu geeignet in Gestalt einer Mehrfach-Spannvorrichtung eingesetzt zu werden. Dazu kann der Werkstückträger im Querschnitt polygonal gestaltet sein und wenigstens zwei parallel zu seiner Längsachse verlaufende Aufspannflächen tragen, wobei auf jeder Aufspannfläche wenigstens ein Drehtisch angeordnet ist.

In grundsätzlich ähnlicher Ausbildung wie sie in der DE 198 40 942 C1 beschrieben ist, kann eine so beschaffene Mehrfach-Spannvorrichtung eine für alle Drehtische gemeinsame Antriebsquelle der Antriebseinrichtung aufweisen, mit der die Getriebemittel der Drehtische formschlüssig gekuppelt sind, so dass bei einer Drehung des Werkstückträgers um seine Längsmittelachse gleichzeitig alle auf dem Werkstückträger angeordneten Drehtische um einen gleichen Drehwinkel um ihre jeweilige Drehachse verdreht werden, der in fester Abhängigkeit von dem Drehwinkel des Werkstückträgers um dessen Längsmittelachse steht. Die Erfindung erlaubt es somit, die aus der DE 198 40 942 C1 bekannte Mehrfach-Spannvorrichtung ohne Änderungen der Außenabmessungen und ohne wesentliche Erhöhung des Steuerungs- oder Antriebsaufwandes mit einfachen Mitteln so zu verbessern und weiterzubilden, dass sie inkrementale Schaltbewegungen der Drehtische um Bruchteile von Winkelgraden erlaubt. Dies wird erreicht ohne dass dadurch die Festigkeit und Belastbarkeit der Drehtische oder des Werkstückträgers oder anderer der Lagerung und Bewegung dieser Teile dienender Elemente beeinträchtig würden.

Weitere vorteilhafte Ausbildungen der neuen Spannvorrichtung sind Gegenstand von Unteransprüchen.

In der Zeichnung ist ein Ausführungsbeispiel des Gegenstandes der Erfindung dargestellt, es zeigen:
- Fig. 1: eine Mehrfach-Spannvorrichtung gemäß der Erfindung in perspektivischer Darstellung,
- Fig. 2: die Mehrfach-Spannvorrichtung nach Fig. 1 mit teilweise abgenommenen Drehtischen unter Veranschaulichung verschiedener Hirth-Verzahnungen, in einer entsprechenden perspektivischen Darstellung,
- Fig. 3: die Mehrfach-Spannvorrichtung nach Fig. 1 im axialen Längsschnitt, in einer Seitenansicht, im Ausschnitt unter Veranschaulichung ihrer Antriebseinrichtung, in einem anderen Maßstab,
- Fig. 4: die Mehrfach-Spannvorrichtung nach Fig. 1 im axialen Längsschnitt, in einer Seitenansicht, im Ausschnitt unter Veranschaulichung ihrer. Abfra- geinrichtung, in einem anderen Maßstab,
- Fig. 5: die Mehrfach-Spannvorrichtung nach Fig. 1, geschnitten längs der Line V-V der Fig. 4 in einer Seitenansicht unter Veranschaulichung verschiedener Betriebszuständen der vier dargestellten Drehtische,
- Fig. 6: die Mehrfach-Spannvorrichtung nach Fig. 1 im axialen Längsschnitt, in einer Seitenansicht, im Ausschnitt unter Veranschaulichung von zwei einander gegenüberliegenden Drehtischen, in einem anderen Maßstab und
- Fig. 7: eine Hubzylinderanordnung der Mehrfach-Spannvorrichtung nach Figur 6, in einer entsprechenden Teilansicht und in einem anderen Maßstab.

Die in den Figuren als Ausführungsbeispiel veranschaulichte Mehrfach-Spannvorrichtung setzt sich aus einer Anzahl von Einzel-Spannvorrichtungen zusammen, die in einem gemeinsamen Werkstückträger angeordnet sind. Die Erfindung ist nicht auf solche Mehrfach-Spannvorrichtungen beschrankt, sondern umfasst auch Einzel-Spannvorrichtungen, die in Gestalt von Teilgeräten, Teilapparaten, Rundschalttischen unter entsprechender Gestaltung des jeweiligen Werkstückträgers oder Gehäuses ausgebildet sein können. Das dargestellte Ausführungsbeispiel dient lediglich zum besseren Verständnis der Erfindung ohne diese zu beschränken.

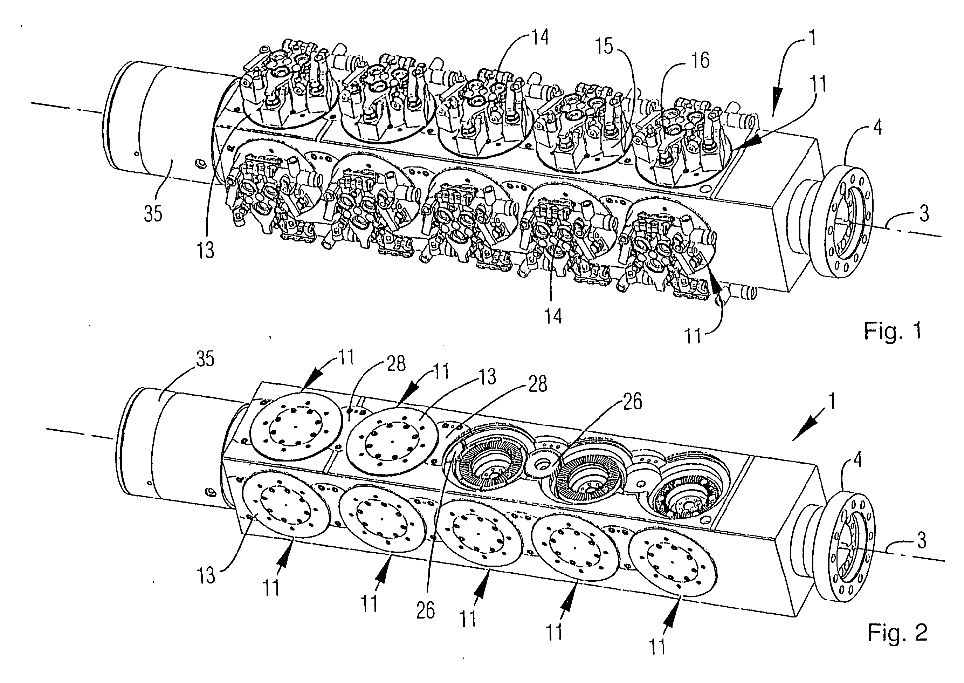

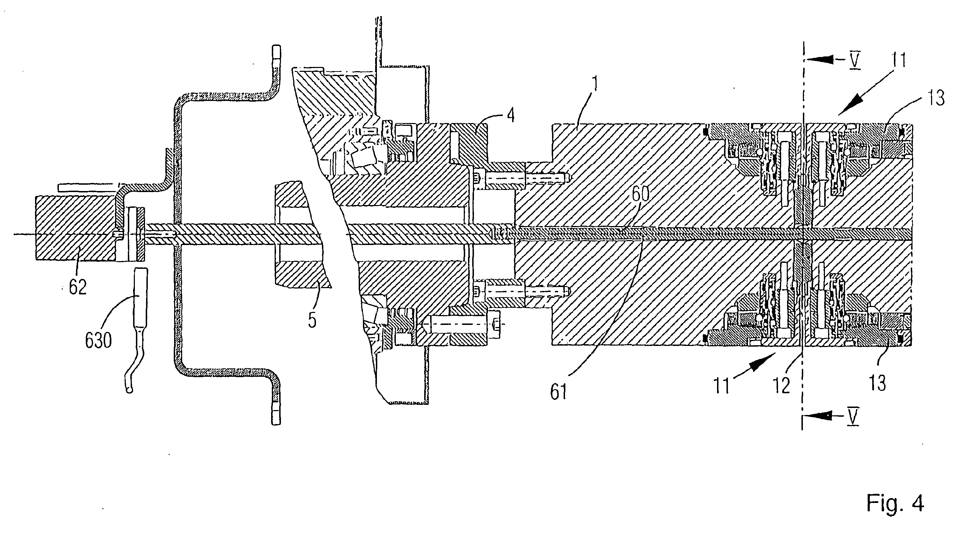

Wie insbesondere aus den Figuren 1, 2 zu ersehen, weist die dargestellte Mehrfach-Spannvorrichtung einen länglichen, im Querschnitt quadratischen, balkenartigen Werkstückträger 1 auf, dessen vier paarweise zueinander parallele Seitenflächen Aufspannflächen 2 bilden. Der Werkstückträger 1, der eine andere polygonale Querschnittsform, bspw. in der Gestalt eines Rechtecks, eines gleichseitigen Dreiecks, eines Sechsecks, etc. haben kann, trägt auf einer einen Stirnseite einen koaxial zu seiner Längsmittelachse 3 angeordneten aufgeschraubten Verbindungsflansch 4 mit dem er in der aus Fig. 4 ersichtlichen Weise mit einem Aufnahmezapfen 5 eines nicht weiter dargestellten CNC-Bearbeitungszentrums verbunden ist. Dem Aufnahmezapfen 5 wird von einer nicht dargestellten Rundschalteinrichtung des CNC-Bearbeitungszentrums eine Dreh- oder Schaltbewegung um die Längsmittelachse 3 erteilt, die es erlaubt den Werkstückträger 1 um seine Längsmittelachse so zu drehen, dass seine Aufspannflächen 2 jeweils auf die Werkzeuge einzelner, rings um die Mehrfach-Spannvorrichtung verteilt angeordneter Bearbeitungsstationen ausgerichtet werden, wie dies bei CNC-Bearbeitungszentren bekannt ist.

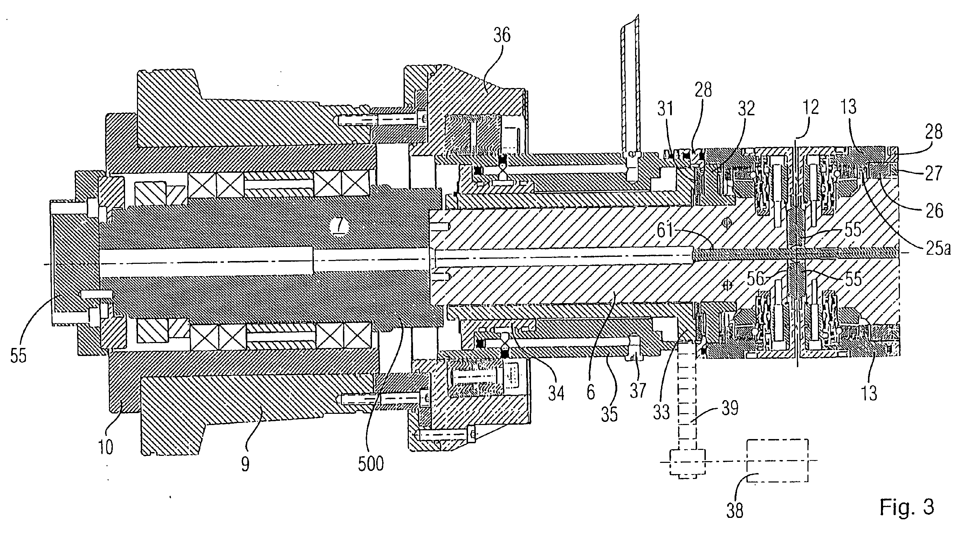

Auf seiner gegenüberliegenden Stirnseite ist der Werkstückträger 1 mit einem in Fig. 3 veranschaulichten koxialen Aufnahmeflansch 500 verschraubt, der einen angeformten koaxialen zylindrischen Lagerzapfen 6 des Werkstückträgers 1 mit einem koaxialen zylindrischen Lagerteil 7 fest verbindet. Das Lagerteil 7 ist über Wälzlager und eine Lagerbüchse 10 in einer einen Bestandteil des CNC-Bearbeitungszentrums bildenden, ortsfesten Lageraufnahme 9 drehbar gelagert. Der Aufnahmezapfen 5 (Fig. 4) und die Lageraufnahme 9 (Fig. 3) des CNC-Bearbeitungszentrums bilden ortsfeste Lagermittel, in denen der Werkstückkörper 1 um seine Längsmittelachse 3 um 360° drehbar gelagert ist. Abhängig von der Bauart des CNC-Bearbeitungszentrums kann die Längsmittelachse 3 horizontal oder vertikal ausgerichtet sein.

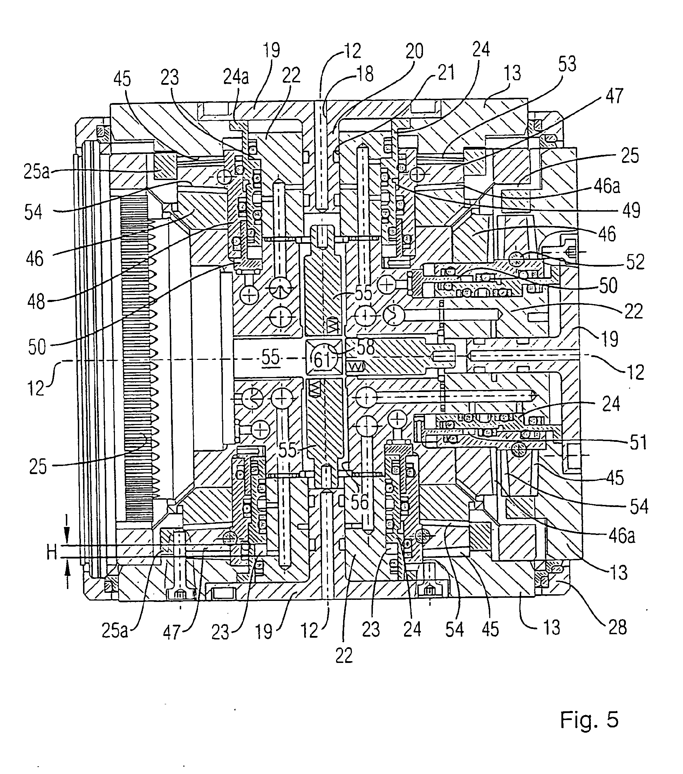

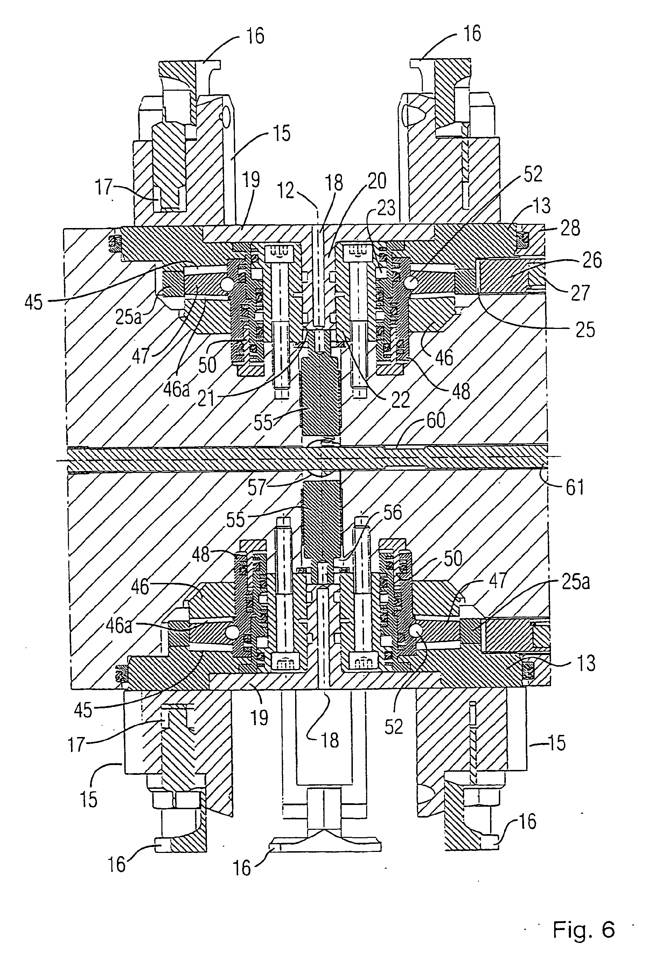

An dem Werkstückkörper 1 sind bei dem dargestellten Ausführungsbeispiel zwanzig Drehtische 11, jeweils um ihre Drehachse 12 (vergleiche Fig. 5) drehbar gelagert. Jeder der einen scheibenförmigen Aufnahmeteller 13 aufweisenden Drehtische 11 ist zur Aufnahme von zu bearbeitenden Werkstucken eingerichtet, wie sie bspw. bei 14 in Fig. 1 angedeutet sind. Er trägt zur Spannung des jeweiligen Werkstückes 14 hydraulische Spannvorrichtungen 15, die, wie aus den Figuren 1, 6 zu entnehmen, jeweils um eine tellerfeste Achse schwenkbare Spannhebel 16 aufweisen, die durch Hydraulikzylinder 17 verschwenkt werden können. Die Hydraulikversorgung der Hydraulikzylinder 17 erfolgt jeweils über einen in dem Aufnahmeteller 13 angeordnete Druckmediumskanal 18, dessen Druckmediumsversorgung im Einzelnen nicht weiter dargestellt ist. Auf jeder der Aufspannflächen 2 sind jeweils 5 Drehtische 11 in einer Reihe in gleichen Abständen voneinander angeordnet, wobei, wie bspw. die Figuren 3, 4, 6 zeigen, jeweils die Drehachsen 12 einer Reihe in einer gemeinsamen Ebene liegen, die in Fig. 3, 4 die Papierebene ist und die die Längsmittelachse 3 des Werkstückträgers 1 enthält. Wie aus Figuren 1 und 5 zu entnehmen, liegen immer 4 Drehtische 11 der vier Aufnahmeflächen 2 in einer gemeinsamen Querebene, die rechtwinklig zu der Längsmittelachse 3 des Werkstückträgers 1 verläuft.

Der Aufnahmeteller 13 jedes der Drehtische 11 ist mittels eines an einem mit dem Aufnahmeteller 13 verschraubten tellerförmigen Verbindungselement 19 angeformten koaxialen Lagerzapfens 20 in der bspw. aus den Figuren 5, 6, 7 zu entnehmenden Weise in einer entsprechenden Lagerbohrung 21 eines mit dem Werkstückträger 1 abgedichtet verschraubten Kolbens 22 frei drehbar gelagert. Der Kolben 22 ist unter Ausbildung eines Zylinderraumes 23 von einer gegen ihn abgedichteten und axial zu ihm verschieblichen Zylinderbüchse 24 umgeben, die mit dem Aufnahmeteller 13 über einen Ringflansch 24a drehbar verbunden ist, der zwischen dem Verbindungselement 19 und dem Aufnahmeteller 13 mit Spiel gelagert ist. Der Zylinderraum 23 ist so bemessen, dass er bei dem dargestellten Ausführungsbeispiel dem Aufnahmeteller 13 einen Axialhub H von maximal ca. 4 mm gegenüber dem Kolben 22 erlaubt (vgl. Fig. 5). Der Aufnahmeteller 13 ist auf seiner Unterseite mit einem mit dem Aufnahmeteller 13 verschraubten Zahnring 25a versehen, der eine koaxiale Stirnverzahnung 25 trägt.

Zwischen benachbarten Drehtischen 11 einer Reihe ist, wie am besten aus den Figuren 1, 2 und 6 zu entnehmen, jeweils ein Zwischenzahnrad 26 angeordnet, das über ein Nadellager auf einem zylindrischen Lagerbolzen 27 drehbar gelagert ist, der mit dem Werkstückkörper 1 verbunden ist. Der zwischen zwei benachbarten Aufnahmetellern 13 einer Reihe von Drehtischen 11 liegende Zwischenraum ist durch ein Abdeckelement 28 verschlossen, wie dies bspw. aus den Figuren 1, 2 hervorgeht.

Die mit den Aufnahmetischen 13 über die Zahnringe 25a verbundenen Stirnverzahnungen 25 die in die jeweils zwischen zwei benachbarten Drehtischen angeordneten Zwischenzahnräder 26 eingreifen, bilden Getriebemittel, die gewährleisten, dass alle Aufnahmeteller 13 einer Reihe von Drehtischen 11 eine zwangsläufig synchronisierte gleiche Drehbewegung um ihre jeweilige Drehachse 12 ausüben.

Die Stirnverzahnung 25 des der Lageraufnahme 9 benachbarten endständigen Aufnahmetellers 13 jeder Reihe von Drehtischen 11 kämmt mit einem Verbindungszahnrad 31, das auf einem Lagerzapfen 32 des Werkstückkörpers 1 frei drehbar gelagert ist, wie dies aus Fig. 3 zu entnehmen ist. Die Verbindungszahnräder 31 der den vier Aufnahmeflächen 2 zugeordneten vier Reihen von Drehtischen 11 stehen mit einem gemeinsamen koaxialen Antriebszahnrad 33 in Eingriff, das als Kronenrad ausgebildet ist und auf dem zylindrischen Lagerzapfen 6 des Werstückkörpers 1 frei drehbar gelagert ist. Das eine gemeinsame Antriebsquelle bildende Antriebszahnrad 33 ist von einer hydraulisch aufweitbaren Klemmhülse 34 umschlossen, die in einem zylindrischen Klemmhülsenträger 35 angeordnet ist, welcher gegen einen Halteflansch 36 drehfest verspannt ist, der seinerseits mit der Lageraufnahme 9 verschraubt ist.

Die Klemmhülse 34, die über einen Hydraulikanschluss 37 gesteuert mit Druckmedium beaufschlagt werden kann, erlaubt es, das gemeinsame Antriebszahnrad 33 drehfest bezüglich der Lageraufnahme 9 und damit des Maschinengestells der CNC-Bearbeitungseinheit zu fixieren. In einer alternativen Ausführungsform kann das Antriebszahnrad 33 auch mit einer eigenen Antriebseinrichtung, bspw. in Gestalt eines von der Steuereinheit der CNC-Bearbeitungseinheit gesteuerten Elektrogetriebemotors 38 etwa über einen Zahnriemenantrieb 39 gekuppelt sein. Der Elektrogetriebemotor 38 erlaubt es das Antriebszahnrad 33 bezüglich des Werkstückträgers 1 relativ zu dem Werkstückträger 1 in Umdrehung zu versetzen und damit alle Drehtische 11 gleichzeitig mit der gleichen Winkelgeschwindigkeit anzutreiben. Dies ermöglicht es, die Werktücke 14 bei ihrer Bearbeitung umlaufen zu lassen und damit eine fünfte Bearbeitungsachse zu schaffen. Daneben ist es aber auch möglich das Antriebszahnrad 33 und damit alle Drehtische 11 gemeinsam programmabhängig um vorbestimmte Winkelwerte zu verdrehen, wenn dies im Hinblick auf die jeweilige Bearbeitungssituation der Werkstücke oder der Einstellung deren Winkelposition zweckmäßig oder erforderlich ist. Wegen weiterer Einzelheiten dazu wird auf die DE 198 40 942 C1 verwiesen.

Bei der in der Zeichnung dargestellten Mehrfach-Spannvorrichtung ist jedem der Drehtische 11 eine formschlüssige Verriegelungseinrichtung an dem Werkstückträger 1 zugeordnet durch die, während der Bearbeitung, das jeweils gespannte Werkstück 14 in einer vorgegebenen Drehwinkelstellung relativ zu dem Werkstückträger exakt lagerichtig verriegelbar ist. Die Einzelheiten dieser mechanischen Verriegelungseinrichtung sind am besten aus den Figuren 5, 6 und 7 zu ersehen.

Der Aufnahmeteller 13 jedes der Drehtische 11 ist mit dem Lagerzapfen 20 seines Verbindungselementes 19 in der zugehörigen Lagerbohrung 21 des mit dem Werkstückträger 1 verschraubten Kolbens 22 nicht nur abgedichtet drehbar, sondern auch begrenzt axial verschieblich gelagert. Auf seiner Unterseite trägt er an einer dem Werkstückträger 1 zugewandten Ringfläche, innen an den Zahnring 25a anschließend, eine Planverzahnung in Gestalt einer sogenannten Hirth-Verzahnung 45, die erste Verriegelungsmittel an dem ein erstes Verriegelungsteil darstellenden Aufnahmeteller 13 bildet.

Dem Aufnahmeteller 13 im Abstand gegenüberliegend ist an dem Werkstückträger 1 ein koaxialer Zahnring 46 angeschraubt, der auf der dem Aufnahmeteller 13 zugewandten Planfläche eine zweite Planverzahnung in Gestalt einer zweiten Hirth-Verzahnung 46a trägt, die zweite Verriegelungsmittel an dem als zweites Verriegelungselement dienenden Zahnring 46 bildet. Die Zahnteilungen der beiden Hirth-Verzahnungen 45, 46a sind voneinander verschieden.

In dem Zwischenraum zwischen der Unterseite des Aufnahmetellers 13 und dem Zahnring 46 ist ein drittes Verriegelungsteil in Gestalt einer Teilscheibe 47 angeordnet, die einen Ringzylinder 48 umschließt, der abgedichtet und axial verschieblich auf die Zylinderbüchse 24 aufgesetzt ist und mit dieser einen ringsumlaufenden Zylinderraum 49 begrenzt. Auf der dem Aufnahmeteller 13 abgewandten Seite ist ein mit dem Werkstückträger 1 starr verbundener Ringkolben 50 vorgesehen, an dessen Innenfläche die innenliegende Zylinderbüchse 24 abgedichtet verschieblich geführt ist und der außen von dem Ringzylinder 48 umschlossen ist. Der Ringzylinder 48 ist gegen die Außenfläche des Ringkolbens 50 abgedichtet und begrenzt mit der freien Stirnfläche des Ringkolbens 50 einen ringförmigen Zylinderraum 51.

Die Teilscheibe 47 ist mit dem Ringzylinder 48 über in entsprechende rillenförmige Kugelaufnahmen eingesetzte Mitnahmekugeln 52 drehbar, aber axial unverschieblich verbunden. Sie trägt auf ihren aneinander überliegenden Planflächen zwei koaxiale, in Ringbereichen angeordnete Hirth-Verzahnungen 53, 54, deren Gestalt und Zahnteilung jeweils der gegenüberliegenden Hirth-Verzahnung 45 bzw. 46a an dem Aufnahmeteller 13 bzw. dem Zahnring 46 entspricht. Die den Verzahnungen 45, 46a zugeordnete Verzahnungen 53, 54 bilden Verriegelungsmittel an der ein drittes Verriegelungsteil darstellenden Teilscheibe 47.

Die Zylinderräume 23, 49, 51 der von der Zylinderbüchse 24 und dem Ringzylinder 48 gebildeten Hubzylinderanordnung sind über geeignete, in dem Werkstückträger 1 ausgebildete Druckmediumsversorgungskanäle und einen in Figur 3 bei 55 angedeuteten Drehverteiler mit einer gesteuerten Druckmittelversorgungseinrichtung der CNC-Bearbeitungseinheit verbunden, die es erlaubt, die Zylinderräume programmgemäß mit Druckmittel zu beaufschlagen oder drucklos zu machen.

Die insoweit beschriebene Mehrfach-Werkzeugspannvorrichtung arbeitet wie folgt:

Für das Ausführungsbeispiel sei angenommen, dass die Hirth-Verzahnung 53 auf der dem Aufspannteller 13 zugewandten Oberseite der Teilscheibe 47 - und die dieser zugeordnete Hirth-Verzahnung 45 an der Unterseite des Aufnahmetellers 13 - eine Zahnteilung von 5 Winkelgrad entsprechend 72 Zähne aufweise. Die auf der gegenüberliegenden Unterseite der Teilscheibe 47 angeordnete Hirth-Verzahnung 54 - und die dieser zugeordnete Hirth-Verzahnung 46a auf dem Zahnring 45 - sei mit einer Zahnteilung von 4,5 Winkelgrad entsprechend 80 Zähnen ausgebildet.

Außerdem ist in dem Zylinderraum 23 die an der Zylinderbuchse 24 in Achsrichtung wirksame Ringfläche 24b größer als die in dem Zylinderraum 49 an dem Ringzylinder 48 wirksame Ringfläche 48a, die ihrerseits kleiner ist als die in dem Zylinderraum 51 an dem Ringkolben 48 wirksame Ringfläche 51a. Bei dem gewählten Ausführungsbeispiel verhalten sich diese in Achsrichtung wirksamen, von dem Druckmitteln beaufschlagten Ringflächen 24b: 48a: 51a wie 4:1:2. Bei Beaufschlagung der Zylinderräume 23b, 48a und 51a mit unter gleichem Druck stehendem Druckmedium stehen die in Achsrichtung auf die Zylinderbüchse 24 bzw. den Ringzylinder 48 ausgeübten Kräfte im Verhältnis dieser axial wirksamen Ringflächen.

Im normalen Betriebszustand während der Bearbeitung der auf die Drehtische 11 aufgespannten Werkstücke 14 ist der Zylinderraum 23 jedes der Drehtische 11 mit Druckmedium beaufschlagt. Damit ist die jeweilige Zylinderbüchse 24 bezüglich des von ihr umschlossenen Kolbens 22 zu der Längsachse 3 des Werkstückträgers 1 hin gerichtet mit einer vorgegebenen Vorspannkraft vorgespannt, mit der Folge, dass die Hirth-Verzahnungen 45 an der Unterseite des Aufspanntellers 13 und 53 auf der Oberseite der Teilscheibe 47 und gleichzeitig die an der Unterseite der lose gelagerten Teilscheibe 47 angeordnete Hirth-Verzahnung 54 mit der Hirth-Verzahnung 46a auf dem Zahnring 46 mit dieser Vorspannkraft in Eingriff gehalten sind. Der Zylinderraum 51 ist drucklos.

Auf diese Weise ist der Aufspannteller 13 über die Teilscheibe 47 und den Zahnring 46 formschlüssig mit dem Werkstückträger 1 verspannt, wobei die Hirth-Verzahnungen eine hochpräzise Positionierung des Aufspanntellers 13 bezüglich des Werkstückträgers 1 gewährleisten.

Nach Abschluss der Bearbeitungsvorgänge an den Werkstücken 14 müssen die Drehtische 11 für den nächstfolgenden Bearbeitungsgang jeweils um ihre Drehachse 12 um gleiche Winkelwerte weiter geschaltet werden. Es sei angenommen, dass der Schaltschritt für den nächstfolgenden Arbeitsgang 0,5 Winkelgrad betrage.

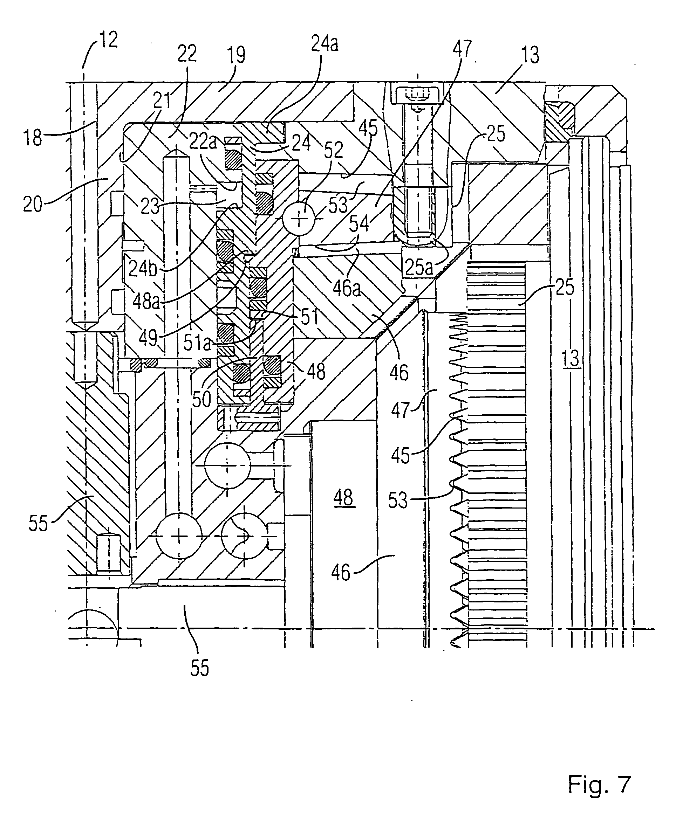

Um diesen Schaltschritt von 0,5 Winkelgrad ,ausgehend von der in Figur 5 links und unten dargestellten Arbeits-oder Betriebsstellung der Drehtische 11 anzusteuern, wird der Druck des Druckmediums in dem jeweiligen Zylinderraum 23 abgesenkt, während der Zylinderraum 49 mit Druck beaufschlagt ist. Demzufolge wird die Zylinderbüchse 24 bezüglich des von ihr umschlossenen Kolbens 22 nach außen bewegt, bis die Hirth-Verzahnungen 45 an der Unterseite des Aufspanntellers 13 und 53 auf der Oberseite der Teilscheibe 47 außer Eingriff gebracht sind. Der Hubweg des Aufspanntellers 13 bezüglich des Werkstückträgers 1 ist dabei dadurch begrenzt, dass die Ringfläche 24b der Zylinderbüchse 24 an der gegenüberliegenden, den Zylinderraum 23 begrenzenden Ringfläche 22a des Kolbens 22 zur Anlage kommt (Fig. 7). Da der Zylinderraum 49 mit Druckmittel beaufschlagt ist, bleiben die Hirth-Verzahnungen 54, 46a an der Unterseite der Teilscheibe 47 bzw. an dem Zahnring 46 unter Vorspannung miteinander in Eingriff während die gegenüberliegende Hirth-Verzahnung 53 auf der Oberseite der Teilscheibe außer Eingriff mit der Hirth-Verzahnung 45 an der Unterseite des Aufspanntellers 13 kommt.

Sowie die Aufspannteller 13 die in Fig. 5 oben dargestellte Stellung einnehmen, in der sie um ihre Drehachse 12 frei drehbar sind, wird der Werkstückträger 1 um seine Längsache 3 um einen Winkel gedreht, der eine Verdrehung der Drehteller 11 um deren Drehachsen 12 um jeweils 5 Winkelgrad ergibt. Da alle Drehteller 11 in bereits beschriebener Weise getrieblich mit dem ortsfest gehaltenen Antriebszahnrad 33 (Fig. 3) gekuppelt sind, werden bei dieser Drehung des Werkstückträgers 1 um dessen Längsache 3 alle Drehtische 11 um den gleichen Winkelwert gedreht.

Nach Abschluss dieser Drehbewegung wird der Zylinderraum 23 jedes der Drehtische 11 wieder mit Druckmedium beaufschlagt. Da die in Achsrichtung wirksame Ringfläche 24b der Zylinderbüchse 24 größer ist als die in Achsrichtung wirksame Ringfläche 48a in dem Zylinderraum 49, wird der Aufspannteller 13 zu der Längsachse 3 des Werkstückträgers 1 hin gerichtet nach innen bewegt bis die Hirth-Verzahnungen 45 an der Unterseite des Aufspanntellers 13 und 53 an der Oberseite der Teilscheibe 47 in Eingriff kommen und den Aufspannteller 13 lagefest präzise gegen den Werkstückträger 1 verriegeln.

Nunmehr wird der Zylinderraum 51 mit Druckmedium beaufschlagt, während der Druck in dem Zylinderraum 23 abgesenkt wird. Das hat zur Folge, dass der Ringzylinder 48 bezüglich des mit dem Werkstückträger 1 starr verbundenen Ringkolbens 50 eine nach außen zu gerichtete Hubbewegung ausführt, bei der er über die Kugeln 52 die Teilscheibe 47 mitnimmt, so dass die an deren Unterseite angeordnete Hirth-Verzahnung 54 mit der Hirth-Verzahnung 46b auf der Oberseite des Zahnringes 46 außer Eingriff kommt. Während dieser Hubbewegung des Aufspanntellers 13 bleibt die Hirth-Verzahnung 53 auf der Oberseite der Teilscheibe unter Vorspannung in festem Eingriff mit der Hirth-Verzahnung 45 auf der Unterseite des sich gemeinsam mit der Teilscheibe 47 nach außen bewegenden Aufspanntellers 13. Das ist dadurch gewährleistet, dass während dieser Hubbewegung der Zylinderraum 49 drucklos ist und die Ringfläche 48a des Ringzylinders 48 an der gegenüberliegenden, den Zylinderraum 49 begrenzenden Ringfläche der Zylinderbüchse 24 anliegt (vgl. Fig. 7).

Der Aufspannteller 13 wird somit gemeinsam mit der Teilscheibe 47 nach außen bewegt bis die Hirth-Verzahnungen 46a, 54 vollständig außer Eingriff gekommen sind, und die in Figur 5 auf der rechten Seite dargestellte Endstellung erreicht ist, an der die Ringfläche 24b des Ringraums 23 an der gegenüberliegenden Ringfläche 22a des Kolbens 22 anschlägt. Nunmehr wird der Werkstückträger 1 um seine Längsachse 3 um 4,5 Winkelgrad, d.h. eine Zahnteilung der Hirth-Verzahnungen 54, 46 im entgegengesetzten Drehsinn zu der vorbeschriebenen Drehung um 5 Winkelgrade zurückgedreht, worauf die Hirth-Verzahnungen 54, 46a wieder eingerastet werden.

Zu diesem Zwecke wird der Zylinderraum 23 wieder mit Druck beaufschlagt, so dass die Zylinderräume 23 und 51 unter dem Druck des Druckmediums stehen. Da die in Achsrichtung wirksame Ringfläche 24b in dem Zylinderraum 23 größer ist als die axial wirksame Ringfläche 51a in dem Zylinderraum 51, entsteht eine zu der Längsachse 3 des Werkstückträgers 1 hin gerichtete Bewegung des Aufnahmetischs 13 und der mit diesem gekoppelten Teilscheibe 47, in deren Verlauf die Hirth-Verzahnungen 54 und 46a in einander greifen und gegenseitig verrastet werden.

Durch die beiden im Vorstehenden geschilderten nacheinander erfolgenden Drehbewegungen, von 5 Winkelgrad in dem einen Drehsinn und sodann 4,5 Winkelgrad in dem anderen Drehsinn, wurde der Aufspannteller 13 resultierend um 0,5 Winkelgrad weiter geschaltet. Bei jeder dieser Drehbewegungen blieb die an sich lose gelagerte Teilscheibe 47 mit ihrer oberen oder ihrer unteren Hirth-Verzahnung 53 bzw. 54 formschlüssig im Eingriff mit der zugeordneten Hirth-Verzahnung 45 an der Unterseite des Aufspanntellers 13 bzw. mit der Hirth-Verzahnung 46a auf der Oberseite des Zahnrings 46. Dadurch ist sichergestellt, dass die an sich lose Teilscheibe 47 sowohl bei der Hubbewegung als auch bei der Drehbewegung immer unter Vorspannung an den Aufspannteller 13 oder den Zahnkranz 46 angepresst und durch die jeweils in Eingriff gehaltenen Hirth-Verzahnungen relativ zu dem Aufspannteller 13 bzw. dem Zahnkranz 46 drehfest verriegelt gehalten ist, so dass sie stets eine kontrollierte Position aufweist und damit eine einwandfreie Winkeleinstellung gewährleistet.

Die beiden im Vorstehenden geschilderten aufeinanderfolgend durchgeführten beiden Schritte zur Einstellung einer resultierenden neuen Drehwinkelposition der Drehtisch 11 können auch in umgekehrter Reihenfolge durchgeführt werden, indem zunächst die Hirth-Verzahnungen 54, 46a in der beschriebenen Weise außer Eingriff gebracht werden und der Aufspannteller 13 um einen vorgegebenen Drehwinkelwert im einen Drehsinn verdreht wird und daran anschließend, nach der Verriegelung der Teilscheibe 47 mit dem Zahnring 46, die anderen Hirth-Verzahnungen 45 und 53 entriegelt werden, um den Aufspannteller 13 um den gewünschten Winkelwert zu verdrehen und anschließend zu verriegeln.

Außerdem ist es möglich, die Drehtische 11 bei den beiden erläuterten aufeinanderfolgenden Drehbewegungen zur Einstellung einer neuen Winkelposition im gleichen Drehsinn um die jeweilige Drehachse 12 zu drehen, d.h., die bei den beiden Drehbewegungen jeweils durchfahrenen Drehwinkelwerte können zueinander addiert oder voneinander abgezogen werden.

Um sicherzustellen, dass alle Drehtische 11 gegen den Werkstückträger 1 einwandfrei lagerichtig verriegelt sind, bevor die Werkzeuge ihre Bearbeitung beginnen und damit Bearbeitungskräfte auf die Werkstücke 14 ausgeübt werden, enthält die Mehrfach-Spannvorrichtung eine Abfrageeinrichtung, die feststellt, ob alle Drehtische 11 einwandfrei über ihre Hirth-Verzahnungen 45, 53 und 54, 46a verriegelt sind.

Diese Abfrageeinrichtung weist Abfrageelemente in Gestalt von zylindrischen Abfragebolzen oder -schiebern 55 auf, die in zugeordneten zu der Lagerbohrung 21 des jeweiligen Drehtisches 11 koaxialen Bohrungen 56 des Werkstückträgers 1 längsverschieblich gelagert sind. Jeder Abfrageschieber 55 liegt stirnseitig an dem Lagerzapfen 20 des zugeordneten Aufnahmetellers 13 an und tastet somit dessen axiale Stellung bezüglich des Werkstückträgers 1 ab. Jeder der Abfrageschieber 55 trägt auf seiner in den Werkstückträger 1 nach innen weisenden Stirnseite ein angeformtes Kulissenteil 57, das lediglich bis zur jeweiligen Längsmittelebene des Abfrageschiebers reicht und nur einen Quadranten dessen kreisförmiger Stirnfläche einnimmt. Das Kulissenteil 57 ist mit einer durchgehenden halbzylinderförmigen Ausnehmung 58 versehen (vgl. Figur5), die rechtwinklig zu der Längsmittelachse des Abfrageschiebers 55 verläuft.

Wenn alle Drehtische 11 in ihrer gegenüber dem Werkstückträger 1 abgesenkten Verriegelungsstellung stehen, sind alle Abfrageschieber 55, jeweils in Gruppen zu vier Abfrageschiebern, in der aus Figur 5 ersichtlichen Weise so zusammengeschoben, dass sich ihre vier halbzylindrischen Ausnehmungen 58 zu einer durchgehenden zylindrischen Bohrung ergänzen, die im Schnittpunkt der Diagonalen der quadratischen Querschnittsform des Werkstückträgers 1 liegt. Eine in einer zu der Längsmittelachse 3 koaxiale Längsbohrung 60 des Werkstückträgers 1 verschieblich angeordnete Abfragestange 61 ist mit einem Betätigungszylinder 62 gekoppelt und dazu eingerichtet, die Abfragestange 61 bezüglich des Werkstückkörpers 1 axial zu verstellen. Ein bei 630 angedeuteter Stellungssensor gibt abhängig von der axialen Stellung der Abfragestange 61 ein Kontrollsignal an die Steuerung des CNC-Bearbeitungszentrums.

Sind alle Drehtische 11 ordnungsgemäß verriegelt, so kann die Abfragestange 61 in den Werkstückkörper 1 eingeschoben werden, womit der Sensor 630 ein entsprechendes Signal abgibt.

Sollte aber einer der Drehtische 11 bei der Verriegelung hängen geblieben sein, so kann die Abfragestange 61, gehindert durch das Kulissenteil 57 des hängengebliebenen Abfrageschiebers 55 nicht voll eingeschoben werden, womit der Sensor 630 das Vorliegen eines Fehlerzustandes an seine Steuereinheit meldet.

Einzelheiten dieser Abfrageeinrichtung sind in der DE 198 40 942 C1 beschrieben.

Schließlich können zusätzlich zu der Teilscheibe 47 auch weitere solche Teilscheiben vorgesehen sein, die Verriegelungsmittel, insbesondere Hirth-Verzahnungen, mit unterschiedlichen Winkelteilungen aufweisen, so dass sich eine praktisch beliebig feine Unterteilung der Schaltbewegung in Winkelinkremente erzielen lässt. Ein großer Vorteil der neuen Spannvorrichtung liegt darin, dass sie sich durch einen geringen Platzbedarf auszeichnet, so dass mehrere dieser Spannvorrichtungen zu einer Mehrfach-Spannvorrichtung zusammengefasst werden können, bei der, wie beschrieben, eine Mehrzahl von Drehtischen 11, auf mehreren Ebenen verteilt, an einem gemeinsamen Werkstückträger angeordnet sind. Die für die Positionierung der Drehtische erforderliche Drehbewegung wird bei den beschriebenen Ausführungsbeispiel für alle Drehtische 11 von einer drehenden NC-Achse abgeleitet, wodurch sich eine sehr wirtschaftliche Lösung ergibt. Die Teilscheiben 47 erfordern keine eigenen zusätzlichen Antriebseinrichtungen und diesen zugeordnete Steuermittel. Die Spannvorrichtung gewährleistet eine sehr präzise und stabile Positionierung der Werkstücke, wobei eine Veränderung der jeweiligen Position in kleinen Winkelinkrementen (kleiner als z.B. ein Winkelgrad) ohne Weiteres möglich ist. In Fällen, in denen dies erforderlich erscheint, kann das Antriebszahnrad 33 (Figur 3) auch durch den Getriebemotor 38 relativ zu dem Werkstückträger 1 verdreht werden, um damit eine zusätzliche, von der Drehung des Werkstückträgers 1 und dessen Längsachse 3 unabhängige Drehung der Drehtische 11 um deren jeweilige Drehachse 12 zu erzielen.

Der einfache, geschlossen Aufbau der neuen Spannvorrichtung bietet daneben die Voraussetzung für den Einsatz in kritischen Bereichen, wie sie bei der Metallbearbeitung, bedingt durch die Einwirkung von Kühlmitteln, Ölen, Schleifstaub wechselnden Temperaturen, Spänen und dergleichen häufig anzutreffen sind.

## Patentansprüche

1. Spannvorrichtung, insbesondere für mehrseitig zu bearbeitende Werkstücke, mit
- einem Werkstückträger (1),
- wenigstens einem zur Werkstückaufnahme eingerichteten Drehtisch (11), der an dem Werkstückträger (1), um eine Drehachse (12) drehbar gelagert ist
- einer dem Drehtisch (11) zugeordneten formschlüssigen Verriegelungseinrichtung an dem Werkstückträger, durch die der Drehtisch (11) in einer vorgegebenen Drehwinkelstellung relativ zu dem Werkstückträger (1) lagegenau verriegelbar ist, wobei die Verriegelungseinrichtung aufweist:
- wenigstens drei zueinander koaxiale Verriegelungsteile (13,47, 46), von denen ein erstes Verriegelungsteil (13) mit dem Drehtisch (11) und ein zweites Verriegelungsteil (46) mit dem Werkstückträger (1) jeweils fest verbunden ist und wenigstens ein drittes Verriegelungsteil (47) zwischen dem ersten (13) und dem zweiten Verriegelungsteil (46) angeordnet und bezüglich des Werkstückträgers (1) drehbar gelagert ist und alle Verriegelungsteile auf den einander zugewandten Planflächen jeweils paarweise miteinander zusammenwirkende Verriegelungsmittel (45,53; 46a,54) tragen, die durch eine axiale Relativbewegung der Verriegelungsteile zueinander in und außer Eingriff bringbar sind und
- Betätigungsmitteln, um die Verriegelungsmittel der Verrieglungsteile wahlweise derart in und außer Eingriff zu bringen, dass das wenigstens eine dritte Verriegelungsteil (47) über seine Verriegelungsmittel immer mit zumindest einem ihm benachbarten Verriegelungsteil verrastet gehalten bleibt und
- einer Antriebseinrichtung, die mit dem Drehtisch (11) gekuppelt ist und durch die der Drehtisch wahlweise allein mit dem ersten Verriegelungsteil (13) oder gemeinsam mit dem ersten und dem damit verrasteten dritten Verriegelungsteil (47) jeweils um einen vorbestimmten Winkelwert um seine Drehachse (12) verdrehbar ist.

2. Spannvorrichtung nach Anspruch 1, **dadurch gekennzeichnet, dass** die Verriegelungsmittel jeweils durch eine Hirth-Verzahnung (5,53; 46a,54) gebildet sind.

3. Spannvorrichtung nach Anspruch 1 oder 2, **dadurch gekennzeichnet, dass** die Verriegelungsmittel (45) des ersten Verriegelungsteils (13) und die diesen zugeordneten Verriegelungsmittel (53) des zweiten Verriegelungsteil (47) eine andere Winkelteilung aufweisen wie die Verriegelungsmittel (46a) des zweiten Verriegelungsteils (46) und die dieser zugeordneten Verriegelungsmittel (54) des dritten Verriegelungsteils (47).

4. Spannvorrichtung nach Anspruch 1 oder 2, **dadurch gekennzeichnet, dass** das wenigstens eine dritte Verriegelungsteil (47) lose zwischen dem ersten und dem zweiten Verriegelungsteil (13,46) gelagert ist.

5. Spannvorrichtung nach Anspruch 1, **dadurch gekennzeichnet, dass** der Drehtisch (11) eine Stirnverzahnung (25) aufweist oder mit diese drehfest verbunden ist, über die er mit Getriebemitteln (26,31) der Antriebseinrichtung (33) formschlüssig gekuppelt ist.

6. Spannvorrichtung nach einem der vorhergehenden Ansprüche, **dadurch gekennzeichnet, dass** die Betätigungsmittel eine Hubeinrichtung aufweisen, durch die das erste und/oder zweite Verriegelungsteil (13,46) und/oder das wenigstens eine dritte Verriegelungsteil (47) relativ zueinander axial verstellbar sind.

7. Spannvorrichtung nach Anspruch 6, **dadurch gekennzeichnet, dass** die Hubeinrichtung druckmediumsbetätigt ist.

8. Spannvorrichtung nach Anspruch 7, **dadurch gekennzeichnet, dass** die Hubeinrichtung wenigstens zwei zu der Drehachse (12) koaxiale, mit Druckmittel beaufschlagbare Hubzylinder (24,48) aufweist, die bezüglich des Werkstückträgers (1) axial verstellbar gelagert sind und von denen einer (24) mit dem ersten (13) oder dem zweiten (46) Verriegelungsteil und ein anderer (48) mit wenigstens einem dritten Verriegelungsteil (47) gekuppelt ist.

9. Spannvorrichtung nach Anspruch 8, **dadurch gekennzeichnet, dass** der eine Hubzylinder (24) mit dem ersten (13) oder zweiten (45) Verriegelungsteil und der andere Hubzylinder (48) mit dem zugeordneten dritten Verriegelungsteil (47) jeweils drehbar, aber axial unverschieblich gekuppelt ist.

10. Spannvorrichtung nach einem der vorhergehenden Ansprüche, **dadurch gekennzeichnet, dass** das wenigstens eine dritte Verriegelungsteil als Teilscheibe (47) ausgebildet ist, die auf den beiden einander gegenüberliegenden Planseiten jeweils ein Verriegelungsmittel (53,54) trägt.

11. Spannvorrichtung nach einem der vorhergehenden Ansprüche, **dadurch gekennzeichnet, dass** das wenigstens eine dritte Verriegelungsteil (47) bei bezüglich des ersten oder des zweiten Verriegelungsteiles (13,46) gelöster Verriegelung mit dem jeweils anderen Verriegelungsteil verrastet oder verriegelt gehalten ist.

12. Spannvorrichtung nach einem der vorhergehenden Ansprüche, **dadurch gekennzeichnet, dass** der Werkstückträger (1) im Querschnitt polygonal gestaltet ist und wenigstens zwei parallel zu seiner Längsachse verlaufende Aufspannflächen (2) trägt und das auf jeder Aufspannfläche wenigstens ein Drehtisch (11) angeordnet ist.

13. Spannvorrichtung nach Anspruch 11, **dadurch gekennzeichnet, dass** auf jeder Aufspannfläche (2) des balkenartig ausgebildeten Werkstückträgers wenigstens zwei Drehtische (11) angeordnet sind, deren Drehachse (12) in einer gemeinsamen, die Längsmittelachse des Werkstückträgers enthaltenden Ebene liegen.

14. Spannvorrichtung nach Anspruch 12 oder 13, **dadurch gekennzeichnet, dass** die Antriebseinrichtung eine für alle Drehtische (11) gemeinsame Antriebsquelle aufweist, mit der die Getriebemittel der Drehtische (11) formschlüssig gekuppelt sind.

15. Spannvorrichtung nach Anspruch 14, **dadurch gekennzeichnet, dass** die gemeinsame Antriebsquelle ein zentrales Antriebszahnrad (33) aufweist mit dem die Getriebemittel in Eingriff stehen, dass der Werkstückträger (1) in Lagermitteln um seine Längsmittelachse (3) drehbar gelagert ist und dass das Antriebszahnrad (33) relativ zu den Lagermitteln drehbar fixierbar ist.

16. Spannvorrichtung nach Anspruch 14, **dadurch gekennzeichnet, dass** die gemeinsame Antriebsquelle unabhängig von der Drehbewegung des Werkstückträgers (1) um dessen Längsachse (3) ansteuerbar ist.

## Claims

1. Clamping device, in particular for workpieces to be machined on multiple sides, with
• a workpiece support (1),
• at least one rotary table (11), which is fitted to receive workpieces and is disposed on the workpiece support (1) to be rotatable around a rotational axis (12),
• a positive locking means associated with the rotary table (11) on the workpiece support (1), through which the rotary table (11) can be locked in precise position in a predetermined rotation angle position relative to the workpiece support (1), wherein the locking means has:
• at least three coaxial locking parts (13, 47, 46), of which respectively a first locking part (13) is fixedly connected to the rotary table (11) and a second locking part (46) is fixedly connected to the workpiece support (1) and at least a third locking part (47) is arranged between the first (13) and the second locking part (46) and is disposed to be rotatable with respect to the workpiece support (1), and on the end faces facing one another all the locking parts bear locking elements (45, 53; 46a, 54), which respectively cooperate with one another in pairs and can be brought into and out of engagement through an axial movement of the locking parts relative to one another, and
• with operating means in order to bring the locking elements of the locking parts selectively into and out of engagement, so that via its locking element the at least one third locking part (47) always remains latched to at least one locking part adjacent to it, and
• with a drive means, which is coupled to the rotary table (11) and through which the rotary table can be rotated selectively alone with the first locking part (13) or together with the first and the third locking part (47) latched thereto respectively by a predetermined angle value around its rotational axis (12).

2. Clamping device according to Claim 1, **characterised in that** the locking elements are respectively formed by a serration (5, 53; 46a, 54).

3. Clamping device according to Claim 1 or 2, **characterised in that** the locking elements (45) of the first locking part (13) and the associated locking elements (53) of the second locking part (47) have a different angular pitch from the locking elements (46a) of the second locking part (46) and the associated locking elements (54) of the third locking part (47).

4. Clamping device according to Claim 1 or 2, **characterised in that** the at least one third locking part (47) is disposed loosely between the first and the second locking part (13, 46).

5. Clamping device according to Claim 1, **characterised in that** the rotary table (11) has a radial serration (25), or is connected to this to be fixed against rotation, via which it is positively coupled to transmission means (26, 31) of the drive means (33).

6. Clamping device according to one of the preceding claims, **characterised in that** the operating means have a lifting means, through which the first and/or second locking part (13, 46) and/or the at least one third locking part (47) are axially adjustable relative to one another.

7. Clamping device according to Claim 6, **characterised in that** the lifting means is operated by means of pressure medium.

8. Clamping device according to Claim 7, **characterised in that** the lifting means has at least two lifting cylinders (24, 48), which are coaxial to the rotational axis (12), may be fed with pressure medium, and which are disposed to be axially adjustable relative to the workpiece support (1) and of which one (24) is coupled to the first (13) or the second (46) locking part and another (48) is coupled to at least a third locking part (47).

9. Clamping device according to Claim 8, **characterised in that** one lifting cylinder (24) is coupled to the first (13) or second (45) locking part and the other lifting cylinder (48) is coupled to the associated third locking part (47), such that they are respectively rotatable but axially non-displacement.

10. Clamping device according to one of the preceding claims, **characterised in that** the at least one third locking part is configured as index plate (47), which respectively bears a locking element (53, 54) on the two opposite end sides.

11. Clamping device according to one of the preceding claims, **characterised in that** when the locking arrangement is released with respect to the first or second locking part (13, 46), the at least one third locking part (47) is held latched or locked to the respective other locking part.

12. Clamping device according to one of the preceding claims, **characterised in that** the workpiece support (1) is configured with a polygonal cross-section and bears at least two mounting surfaces (2) running parallel to its longitudinal axis, and that at least one rotary table (11) is arranged on each mounting surface.

13. Clamping device according to Claim 11, **characterised in that** arranged on each mounting surface (2) of the beam-like workpiece support are at least two rotary tables (11), the rotational axis (12) of which lie in a common plane containing the longitudinal central axis of the workpiece support.

14. Clamping device according to Claim 12 or 13, **characterised in that** the drive means has a common drive source for all rotary tables (11), with which the transmission means of the rotary tables (11) is positively coupled.

15. Clamping device according to Claim 14, **characterised in that** the common drive source has a central driving toothed wheel (33), with which the transmission means engage, that the workpiece support (1) is disposed in bearing means to be rotatable around its longitudinal central axis (3), and that the driving toothed wheel (33) can be fixed to be rotatable relative to the bearing means.

16. Clamping device according to Claim 14, **characterised in that** the common drive source can be actuated independently of the rotational movement of the workpiece support (1) around its longitudinal axis (3).

## Revendications

1. Dispositif de serrage, en particulier pour pièces à usiner sur plusieurs faces, avec
- un porte-pièce (1),
- au moins un plateau tournant (11) agencé pour recevoir des pièces et monté sur le porte-pièce (1) en tournant autour d'un axe de rotation (12),
- un dispositif de verrouillage sur le porte-pièce, associé au plateau tournant (11) par complémentarité de formes, grâce auquel le plateau tournant (11) peut être verrouillé avec précision dans une position angulaire déterminée par rapport au porte-pièce (1), le dispositif de verrouillage comportant :
- au moins trois pièces de verrouillage (13, 47, 46), coaxiales entre elles, parmi lesquelles une première pièce de verrouillage (13) est solidaire du plateau tournant (11) et une deuxième pièce de verrouillage (46) est solidaire du porte-pièce (1), tandis qu'au moins une troisième pièce de verrouillage (47) est disposée entre la première (13) et la deuxième pièce de verrouillage (46) et est montée rotative par rapport au porte-pièce (1), toutes les pièces de verrouillage portant sur les surfaces planes tournées les unes vers les autres des moyens de verrouillage (45, 53 ; 46a, 54) coopérant entre eux par paires et qui, par un mouvement axial relatif des pièces de verrouillage entre elles, peuvent être amenés dans une position de dégagement ou d'engagement, et
- des moyens d'actionnement destinés à amener les moyens de verrouillage des pièces de verrouillage sélectivement en position de dégagement ou d'engagement, de telle sorte que la troisième pièce de verrouillage (47), au nombre d'au moins une, soit toujours maintenue engagée par ses moyens de verrouillage avec au moins l'une des pièces de verrouillage adjacentes, et
- un dispositif d'entraînement couplé au plateau tournant (11), grâce auquel le plateau tournant peut tourner d'une valeur angulaire prédéterminée autour de son axe de rotation (11), soit seul avec la première pièce de verrouillage (13), soit avec la première ainsi qu'avec la troisième pièce de verrouillage (47), engagée avec celle-ci.

2. Dispositif de serrage selon la revendication 1, **caractérisé en ce que** les moyens de verrouillage sont formés chacun d'une denture Hirth (5, 53 ; 46a, 54).

3. Dispositif de serrage selon la revendication 1 ou 2, **caractérisé en ce que** les moyens de verrouillage (45) de la première pièce de verrouillage (13) et les moyens de verrouillage (53) de la deuxième pièce de verrouillage (47) qui leur sont associés possèdent un autre pas angulaire que les moyens de verrouillage (46a) de la deuxième pièce de verrouillage (46) et les moyens de verrouillage (54) de la troisième pièce de verrouillage (47) qui leur sont associés.

4. Dispositif de serrage selon la revendication 1 ou 2, **caractérisé en ce que** la troisième pièce de verrouillage (47), au nombre d'au moins une, est montée folle entre la première et la deuxième pièce de verrouillage (13, 46).

5. Dispositif de serrage selon la revendication 1, **caractérisé en ce que** le plateau tournant (11) possède une denture droite (25) ou est solidaire en rotation de celle-ci, de manière à être accouplé par complémentarité de formes avec des moyens de transmission (26, 31) du dispositif d'entraînement (33).

6. Dispositif de serrage selon l'une des revendications précédentes, **caractérisé en ce que** les moyens d'actionnement possèdent un dispositif de levage grâce auquel peuvent être déplacées axialement, relativement l'un à l'autre, la première et/ou la deuxième pièce de verrouillage (13, 46) et/ou la troisième pièce de verrouillage (47), au nombre d'au moins une.

7. Dispositif de serrage selon la revendication 6, **caractérisé en ce que** le dispositif de levage est actionné par un fluide sous pression.

8. Dispositif de serrage selon la revendication 7, **caractérisé en ce que** le dispositif de levage possède au moins deux vérins de levage (24, 48) coaxiaux avec l'axe de rotation (12), pouvant recevoir un fluide sous pression, qui sont montés réglables dans la direction axiale par rapport au porte-pièce (1) et dont l'un (24) est couplé à la première (13) ou à la deuxième (46) pièce de verrouillage et l'autre (48) est couplé à la troisième pièce de verrouillage (47), au nombre d'au moins une.

9. Dispositif de serrage selon la revendication 8, **caractérisé en ce que** le premier vérin de levage (24) est couplé avec la première (13) ou la deuxième (45) pièce de verrouillage, et le deuxième vérin de levage (48) avec la troisième pièce de verrouillage (47) associée, de manière à permettre la rotation mais de manière solidaire dans la direction axiale.

10. Dispositif de serrage selon l'une des revendications précédentes, **caractérisé en ce que** la troisième pièce de verrouillage, au nombre d'au moins une, prend la forme d'un plateau diviseur (47) qui, sur chacun des deux côtés plans opposés, porte un moyen de verrouillage (53, 54).

11. Dispositif de serrage selon l'une des revendications précédentes, **caractérisé en ce que** la troisième pièce de verrouillage (47), au nombre d'au moins une, lorsqu'elle est déverrouillée par rapport à la première ou à la deuxième pièce de verrouillage (13, 46), est maintenue engagée ou verrouillée avec l'autre pièce de verrouillage.

12. Dispositif de serrage selon l'une des revendications précédentes, **caractérisé en ce que** le porte-pièce (1) est de section polygonale et porte au moins deux surfaces de bridage (2) parallèles à son axe longitudinal et **en ce qu'**au moins un plateau tournant (11) est disposé sur chaque surface de bridage.

13. Dispositif de serrage selon la revendication 11, **caractérisé en ce que** chaque surface de bridage (2) du porte-pièce conformé en poutre porte au moins deux plateaux tournants (11) dont les axes de rotation (12) se situent dans un plan commun passant par l'axe longitudinal du porte-pièce.

14. Dispositif de serrage selon la revendication 12 ou 13, **caractérisé en ce que** le dispositif d'entraînement possède une source d'entraînement commune à tous les plateaux tournants (11), couplée par complémentarité de forme avec les moyens de transmission des plateaux tournants (11).

15. Dispositif de serrage selon la revendication 14, **caractérisé en ce que** la source commune d'entraînement possède un pignon central d'entraînement (33), avec lequel les moyens de transmission sont engrenés, **en ce que** le porte-pièce (1) est monté dans des moyens de paliers à rotation autour de son axe longitudinal (3) et **en ce que** le pignon d'entraînement (33) peut être immobilisé par rapport aux moyens de palier tout en pouvant tourner.

16. Dispositif de serrage selon la revendication 14, **caractérisé en ce que** la source commune d'entraînement peut être commandée indépendamment du mouvement de rotation du porte-pièce (1) autour de son axe longitudinal (3).
